(19) Europäisches Patentamt
European Patent Office
Office européen des brevets

(11) **EP 4 714 757 A1**

(12) **EUROPEAN PATENT APPLICATION**

(43) Date of publication:
**25.03.2026 Bulletin 2026/13**

(21) Application number: **24201906.5**

(22) Date of filing: **23.09.2024**

(51) International Patent Classification (IPC):
**B60S 1/08** (2006.01)  **G01N 22/00** (2006.01)
**G01N 33/18** (2006.01)  **G01S 13/88** (2006.01)
G01N 21/3581 (2014.01)  G01N 21/94 (2006.01)
G01N 21/958 (2006.01)  G02B 1/00 (2006.01)

(52) Cooperative Patent Classification (CPC):
**B60S 1/0833; G01S 13/88;** G01N 2021/945;
G01N 2021/9586; G02B 1/002

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Infineon Technologies AG**
**85579 Neubiberg (DE)**

(72) Inventors:
• **MICHENTHALER, Christof**
  **9613 Feistritz an der Gail (AT)**
• **HAMMERSCHMIDT, Dirk**
  **9584 Finkenstein (AT)**
• **GOPAL KALPANA, Ghogul**
  **9500 Villach (AT)**

(74) Representative: **Infineon Patent Department**
**Intellectual Property**
**Infineon Technologies AG**
**Postfach 22 16 44**
**80506 München (DE)**

(54) **METHOD AND SENSOR FOR DETECTING A SUBSTANCE ON A WINDSHIELD**

(57) The present disclosure relates to a sensor arrangement for detecting a substance (112) on a windshield (104). The sensor arrangement comprises a mm-wave signal generator (102) configured to provide a first mm-wave signal. The sensor arrangement further comprises a receiver (106) and a processing circuit (108). The receiver (106) is configured to receive a second mm-wave signal. The processing circuit (108) is configured to determine information indicating the substance (112) on the windshield (104) based on the first mm-wave signal and the second mm-wave signal.

FIG 3

EP 4 714 757 A1

## Description

### TECHNICAL FIELD

The present disclosure relates to a method for detecting a substance on a windshield. The present disclosure further relates to a sensor arrangement and in particular to a sensor arrangement suitable for detecting a substance on a windshield.

### BACKGROUND

A sensor arranged below a windshield of a vehicle may be used to detect a substance e.g., snow or rain falling on the windshield. The sensor may activate a wiper in order to clean the windshield. The sensor is usually an infrared sensor or an optical sensor having a light emitting diode and a light detector. The light emitting diode transmits an optical signal which is scattered or reflected by the windshield and eventually received by the light detector. The scattering or the reflection of the optical signal is influenced by the presence of the substance on the windshield. Based on the received optical signal the wiper may or may not be activated. For example, when the optical signal received by the light detector is same as the optical signal transmitted by the light emitting diode, the wiper will not be activated. However, when the optical signal received by the light detector is not same as the optical signal transmitted by the light emitting diode, the wiper will be activated. The drawback of this approach is that the received optical signal can be influenced by any substance on the windshield. The sensor may be not able to distinguish between snow, water, dirt, salt or debris and hence, the wiper will be activated in all cases. As a result, the senor may wear off quickly due to over-use. In case of dirt or debris, the wiper may smear the dirt or debris all over the windshield reducing the visibility of the driver which may lead to accidents. This may increase the likelihood of accidents caused by poor visibility.

Accordingly, a desire exists to provide a concept which provides a safer operation of a wiper on a windshield.

### SUMMARY

The present disclosure relates to a method for detecting a presence of a substance on a windshield, the method comprising:

> providing a first mm-wave signal such that the first mm-wave signal is converted to a
> second mm-wave signal dependent on a presence of the substance on the windshield;
> receiving the second mm-wave signal; and
> determining a first result indicating the presence of the substance on the windshield based on the received second mm-wave signal.

The present disclosure relates to a sensor arrangement for detecting a substance on a windshield. The sensor arrangement comprises a mm-wave signal generator configured to provide a first mm-wave signal. The sensor arrangement further comprises a receiver and a processing circuit. The receiver is configured to receive a second mm-wave signal. The processing circuit is configured to determine information indicating the substance on the windshield based on the first mm-wave signal and the second mm-wave signal.

Those skilled in the art will recognize additional features and advantages upon reading the following detailed description, and upon viewing the accompanying drawings.

### BRIEF DESCRIPTION OF THE DRAWINGS

The present disclosure is illustrated by way of example, and not by way of limitation, in the figures of the accompanying drawings in which like reference numerals refer to similar or identical elements. The elements of the drawings are not necessarily to scale relative to each other. The features of the various illustrated examples can be combined unless they exclude each other.

> Figure 1 illustrates an example of a schematic of an arrangement comprising a mm-wave device and a windshield, wherein the mm-wave device is suitable for detecting a substance on the windshield.
>
> Figure 2 illustrates another example of a schematic of an arrangement comprising a mm-wave device and a windshield, wherein the mm-wave device comprises ports.
>
> Figure 3 illustrates a perspective view of an example of an arrangement comprising a mm-wave device arranged below a windshield, and wherein the mm-wave device has a mm-wave element.
>
> Figure 4 illustrates various examples of a mm-wave element.
>
> Figure 5 illustrates a diagram showing a forward transmission coefficient versus frequency for a situation and a reference situation, wherein the situation has a substance present above a windshield and the reference situation has no substance present above the windshield.
>
> Figure 6 illustrates an example of an arrangement according to the situation of Figure 5.
>
> Figure 7 illustrates a diagram showing a forward transmission coefficient versus frequency for various situations, wherein different substances are present on a windshield.

Figure 8 illustrates the various examples of situations of Figure 7.

## DETAILED DESCRIPTION

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

Embodiments described herein provides a new concept for a safer operation of a windshield wiper. The new concept is based on mm-wave signals used for detecting a presence of a substance on a windshield. A first mm-wave signal is converted to a second mm-wave signal in presence of the substance on the windshield. As the first mm-wave passes through the substance on the windshield, it is influenced by the substance and thereby converted to the second mm-wave signal. Therefore, the second mm-wave signal will be different from the first mm-wave signal. A first mm-wave characteristic of the second mm-wave signal i.e., an intensity or a phase or an amplitude may provide information indicating the presence of the substance on the windshield. In other words, the first mm-wave characteristic of the second mm-wave signal may be used to identify the substance on the windshield. Based on the substance on the windshield, a wiper may be activated selectively. The above concept therefore allows to selectively activate the wiper for example only when specific substances or the specific amounts of the substances are detected.

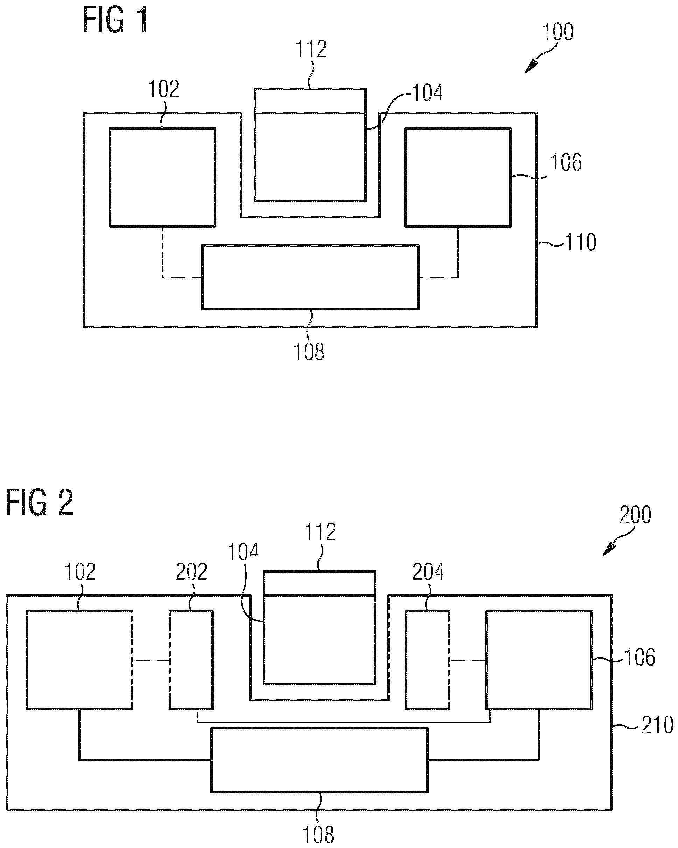

Figure 1 shows a schematic of an arrangement 100 comprising a mm-wave device 110 and a windshield 104. The mm-wave device 110 is suitable for detecting a presence of a substance 112 on the windshield 104. The mm-wave device 110 may be arranged below the windshield 104 and the substance 112 may be present above the windshield 104. The mm-wave device 110 has a mm-wave signal generator 102, a receiver 106 and a processing circuit 108. The mm-wave generator 102 is configured to provide a first mm-wave signal at a frequency in the arrangement 100. The mm-wave signal generator 102 may include a local oscillator and an amplifier. The local oscillator generates a signal which is amplified by the amplifier and hence a first mm-wave signal is provided in the arrangement 100. The first mm-wave signal is characterized by a first mm-wave characteristic e.g., a phase, a power or an amplitude of the first mm-wave signal. The local oscillator may transmit a portion of the first mm-wave signal to the processing circuit 108. The processing circuit may be configured to determine a value of the first mm-wave characteristic of the first mm-wave signal. The mm-wave signal may have a frequency in a range from 10 GHz to 300 GHz. In some examples, the range of operation may be selected to obtain a wavelength which may be in a range around the thickness of the windshield 104. In some examples, the mm-wave signal may be in a range from 10 GHz t0 150 GHz or 30 GHz to 70 GHz.

When the first mm-wave signal passes through the substance 112 on the windshield 104, the first mm-wave signal is influenced by the substance 112 on the windshield 104 and thus, converted to a second mm-wave signal. The frequency of the first mm-wave may be the same as the second mm-wave signal as the system may constitute a linear system. The influencing may result in a change of the first mm-wave characteristic of the first mm-wave signal due to the dielectric properties e.g., a dielectric constant and a refractive index of the substance 112. The second mm-wave signal is characterized by a first mm-wave characteristic e.g., a phase, a power or an amplitude of the second mm-wave signal. Due to the influence of the substance 112 on the windshield 104, the first mm-wave signal is different from the second mm-wave signal. In particular, the first mm-wave characteristics of the first mm-wave and the second mm-wave are different. For example, the substance 112 on the windshield 104 may absorb a part of the first mm-mm wave and therefore, the resulting second mm-wave signal may have a different amplitude as compared to the first mm-wave signal. In other examples, the spectral characteristic may be modified due to the presence of the substance 112 resulting in a change of the first mm-wave characteristic.

In other words, the first mm-wave characteristic of the second mm-wave signal depends upon the substance 112. As an example, if a first substance 112 has a higher dielectric constant at the frequency of the first mm-wave signal compared to a second substance 112, the amplitude of the second mm-wave signal generated in presence of the first substance 112 will be weaker than the amplitude of the second mm-wave signal generated in presence of the second substance 112 for a given amplitude of the first mm-wave signal. Similarly, a phase of the second mm-wave signal will depend upon the dielectric constant of the substance 112. In other words, the first mm-wave characteristic of the second mm-wave signal has the information regarding the dielectric properties of substance 112 on the windshield 104.

The receiver 106 is configured to receive the second mm-wave signal. In one example, the receiver 106 has a power detector such as a diode to detect a power of the received second mm-wave signal or a peak detector circuit to detect an amplitude of the received second mm-wave signal. Information indicating the detected power or amplitude is transferred to the processing circuit 108 for processing the information. The processing circuit 108 is configured to determine a value of the first mm-wave characteristic of the second mm-wave signal.

In a further example, the receiver 106 has a mixer which converts the second mm-wave signal into a baseband signal. The baseband signal is further transferred to and processed by the processing circuit 108 having an analog baseband signal processing chain and an analog to digital converter. The analog baseband signal processing chain may include one or more filters to remove undesired side bands and image frequencies. The filtered baseband signal is supplied to the analog-to-digital converter to digitize the baseband signal for further processing in a digital domain. Synchronous IQ demodulation may be used to determine a value of the phase of the second mm-wave signal. In some examples, the receiver may receive a phase locked loop signal which may be used to provide the synchronous IQ demodulation. In some examples, a phase detector circuit may be used to determine the value of the phase of the second mm-wave signal.

The processing circuit 108 may process the received second mm-wave signal to determine a first result. The first result may indicate the presence of the substance 112 on the windshield 104 based on the received second mm-wave signal. The processing circuit 108 may evaluate or compare the values of the first mm-wave characteristic of the first mm-wave signal and the second mm-wave signal. It is to be noted that in addition to the substance 112, other elements in the signal path such as the windshield 104 may have an influence on the second mm-wave signal. The first mm-wave signal and the second mm-wave signal therefore may already differ from each other due to the presence of these elements. The influence of the other elements can be determined, for example by determining in a calibration measurement or by simulations an expected result when no substance is on the windshield 104. This information may be used in the determining of the presence of the substance 112. The absence of the substance 112 on the windshield 104 is detected in case there is no significant difference between the actual measured value of the first mm-wave characteristic of the second mm-wave signal and the expected value of the first mm-wave characteristic of the second mm-wave signal. A non-zero difference between the actual measured value of the first mm-wave characteristic of the second mm-wave signal and the expected value of the first mm-wave characteristic of the second mm-wave signal may indicate at least one of the presence, the amount or a change of the amount of the substance 112 on the windshield 104.

However, the influence of the windshield on the second mm-wave signal can be predetermined and therefore, can be removed when determining the first result. The first result constitute only the influence of the substance when the first mm-wave signal is converted to the second mm-wave signal.

Further, from the difference in the values of the first mm-wave characteristic of the first mm-wave signal and the second mm-wave signal, the substance 112 can be identified in particular by the dielectric properties of the substance 112. In case of the substance 112 is uniformly distributed over the windshield 104, the difference between the values of the phases ($\Delta\phi$) of the first mm-wave signal and the second mm-wave signal is related to the relative permittivity $\varepsilon_r$ of the substance 112 by the following relation:

$$\Delta\phi = \left(\frac{2\pi}{\lambda}\right) * d * \left(\sqrt{\epsilon_r} - 1\right)$$

Wherein A is the wavelength of the first mm-wave signal and d is the distance that first mm-wave signal travels through the substance 112. The distance d can be chosen as per the dimensions of the sensor arrangement 100 and therefore can be a constant. From $\Delta\phi$, processing circuit 108 may calculate the relative permittivity $\varepsilon_r$ of the substance 112 and compare with the pre-stored values in the processing circuit 108 which can indicate whether the substance 112 is fresh water, sea water, salt speckles, salt layer or dirt etc.

The frequency of the first mm-wave signal may be a first frequency. The mm-wave generator 102 may be configured to generate the first mm-wave signal at the first frequency and a second frequency. The first mm-wave signal with the first frequency and the second frequency can be generated by amplitude modulation or frequency modulation. A carrier signal having the first frequency is mixed with a modulation signal having the second frequency, the resulting first mm-wave signal comprises the first frequency and the second frequency. The processing circuit 108 may determine and compare the values of the first mm-wave characteristic of the first mm-wave signal and the second mm-wave signal at the first frequency and/or the second frequency. The processing circuit 108 may be configured to determine the first result at the first frequency and the second frequency.

Alternatively, the processing circuit 108 may be configured to fit the value of the first mm-wave characteristic of the first mm-wave signal between the first frequency and the second frequency and thus producing a fitted curve. Similarly, the processing circuit 108 may be configured to fit the value of the first mm-wave characteristic of the second mm-wave signal between the first frequency and the second frequency and thus producing another fitted curve. The fitted curves may be used for comparison of the values of the first mm-wave characteristic of the first mm-wave signal and the second mm-wave signal and hence determine the first result.

In some examples, the first mm-wave signal having the first frequency may be provided in different time intervals than the first mm-wave signal having the second frequency. For example, the first mm-wave signal with the first frequency may be provided in the first time interval and the first mm-wave signal with the second frequency may be provided in a second time interval. This avoids to generate signals having simultaneously multiple frequencies contained in the signal. Accordingly, the effort for the signal generation can be reduced.

It is to be noted that in some examples, the mm-wave generator 102 is configured to generate the first mm-wave signal at multiple frequencies. Furthermore, each frequency of the multiple frequencies is generated at a time interval different from a time interval of any other frequency of the multiple frequencies. The first result may be determined at multiple frequencies of the first mm-wave signal. With multiple frequencies not only the presence of the substance 112 is determined but also the type of the substance, e.g. water, ice, salt speckles, sea water etc.

In some examples, the processing circuit 108 is configured to determine the information based on the value of the first mm-wave characteristic of the first mm-wave signal and the value of the first mm-wave characteristic of the second mm-wave signal at multiple frequencies.

In some examples, the mm-wave generator 102, the processing circuit 108 and the receiver 106 may be arranged within a single chip.

Figure 2 shows a further example of a schematic of an arrangement 200 comprising a mm-wave device 210 and the windshield 104. The mm-wave device 210 may include some or all features of the mm-wave device 110 of Figure 1. The mm-wave device 210 has at least one port 202, 204 in the propagation of the mm-wave signal in the arrangement 200. In one example, the amplitude or power of the second mm-wave signal at the port 202, 204 may be used to determine the presence of the substance 112 on the windshield 104. In particular, the processing circuit 108 may be configured to determine an information related to a characteristic of at least one S-parameter e.g., an input reflection coefficient, a reverse transmission coefficient, or a forward transmission coefficient. It may require less complex circuitry to determine the amplitude or the power of the second mm-wave by the processing circuit 108 than the phase of the second mm-wave element.

The first port 202 may be coupled to the mm-wave generator 102 and the receiver 106. The first port 202 may be a transmission node or an antenna. The mm-wave generator 102 generates the first mm-wave signal which is transmitted to the first port 202. As described herein, the first mm-wave signal is converted to the second mm-wave in the presence of the substance 112 on the windshield 104. The second mm-wave signal may be a signal received at the first port 202 after being scattered from the substance 112 which may be transmitted to the receiver 106 and the receiver 106 is coupled to the processing circuit 108. Based on the second mm-wave signal which was received at the receiver 106, the processing circuit 108 may determine the information indicating the input reflection coefficient at the first port 202. In other words, the first result may include determining the input reflection coefficient at the first port 202. For example, a value of the input reflection coefficient at the first port 202 may be determined which is a ratio of the amplitude of the second mm-wave signal at the first port 202 to the amplitude of the first mm-wave signal at the first port 202. As described herein, the amplitude of the second mm-wave signal depends upon the substance 112 on the windshield 104 and thereof the value of the input reflection coefficient at the first port 202 will also depend upon the substance 112 on the windshield 104. The processing circuit 108 may compare the value of the input reflection coefficient against a reference value and may determine a difference between the values of the input reflection coefficient and the reference value. The reference value may an input reflection coefficient in the absence of the substance 112 on the windshield 104. A non-zero difference would indicate that the presence of the substance 112 on the windshield 104.

In some examples, the first result may include determining the forward transmission coefficient. In addition to the first port 202, the mm-wave device 210 may have a second port 204 coupled with the receiver 106. In one example, the signal received at the second port 204 which is further transmitted to the receiver 106 may be the second mm-wave signal. The processing circuit 108 may determine information indicating the forward transmission coefficient related to the second port 204 based on the second mm-wave signal received at the receiver 106. The forward transmission coefficient is a ratio the amplitude of the second mm-wave signal at the second port 204 to the amplitude of the first mm-wave signal at the first port 202. Similar to the input reflection coefficient, the forward transmission coefficient may also indicate the presence of the substance 112 on the windshield 104

In one example, the signal transmitted to the receiver 106 via the first port 202 and the second port 204 are used to determine the substance 112 on the windshield 104. In this example, the signal transmitted to the receiver 106 from the first port 202 may be considered a first portion of the second mm-wave signal and the signal transmitted from the second port 204 to the receiver 106 may be considered a second portion of the second mm-wave signal. The processing circuit 108 may determine from the signals received at the receiver 106 both a reflection coefficient and a forward transmission coefficient.

A characteristic of the S-parameter i.e. the input reflection coefficient, the reverse transmission coefficient, or the forward transmission coefficient may be determined at the first frequency and/or the second frequency. Alternatively, the characteristic of the S-parameter may be determined at multiple frequencies.

In some examples, the mm-wave device 102 may be implemented as a transceiver.

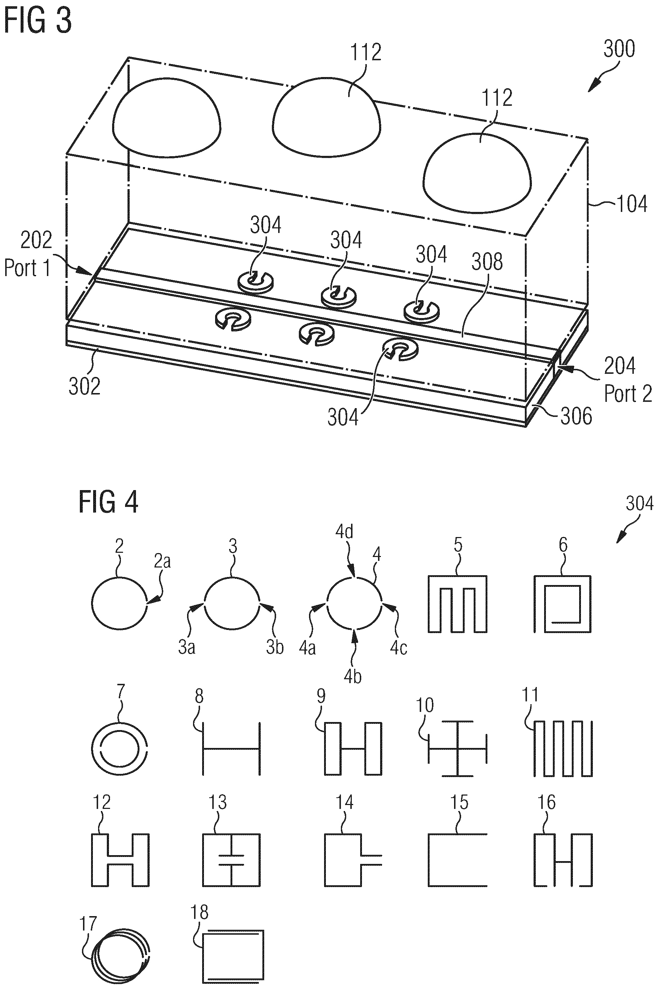

Figure 3 shows a perspective view of an arrangement 300 comprising a mm-wave device 302 arranged below the windshield 104. The mm-wave device 302 may include some or all features of the mm-wave device 210 of the Figure 2. In Figure 3, only a section of the mm-wave device 302 is shown and for simplicity, the mm-wave generator 102, the receiver 106 and the processing circuit 108 are omitted. The mm-wave device 302 comprises a wave transmission element 308 and a mm-wave element 304 arranged on a substrate 306 e.g., a printed circuit board. The wave transmission element 308 may be a waveguide or a metallic strip. The first port 202 and the second port 204 may be arranged at ends of the wave transmission element 308 such that the wave transmission element 308 can guide the first mm-wave signal and the second mm-wave signal between the ports 202, 204.

The mm-wave element 304 may comprise a conductor e.g., cooper, silver etc. or a dielectric e.g., polymer or ceramic etc. or a magnetic material e.g., ferrite or iron. At least one characteristic property of the mm-wave element 304, for example a resonance frequency, may depend on the dielectric properties of the substance 112 on the windshield. Accordingly, a change of the characteristic property of the mm-wave element 304 has an influence on the signal which is reflected via the first port 202 (port 1) to the receiver 106 and on the signal that is transmitted via the second port 204 (port 2) to the receiver 106.

In one embodiment, the mm-wave element 304 may be a meta material structure. The metamaterial is a material engineered to have a property that may not be found in naturally occurring materials or may be designed to achieve specific properties. They are made from assemblies of multiple structural elements fashioned from composite materials such as metals or plastics. The materials may be arranged in repeating or periodic patterns, at scales that are smaller than the wavelengths of the phenomena they influence. In other words, metamaterials may attain the desired effects by incorporating structural elements of sub-wavelength sizes, i.e., features which are actually smaller than the wavelength of the signals that they affect.

As a result, metamaterials derive their properties not necessarily from the properties of the base materials, but from their designed structures. Their precise shape, geometry, size, orientation, and arrangement of the structural elements gives the metamaterials their smart properties capable of manipulating electromagnetic waves: by blocking, reflecting, absorbing, enhancing, or bending signals.

A metamaterial may be a subset of a larger group of heterogeneous structures consisting of a base solid material and elements of a different material. The distinction of metamaterials is that they have special, sometimes anomalous, properties over a limited frequency band. For example, mm-wave metamaterials may exhibit special properties over a millimeter band, which is the band of spectrum between 30 GHz and 300 GHz noted above.

The meta material structure may include resonator-elements, antenna-elements, filter-elements, waveguide-elements, transmission line elements, or a combination of those shown in Figure. 4. The meta material structure dimensions may range up to several wavelengths but is typically below one wavelength. They consist of parts that generate magnetic fields (e.g., conductor rings) and other parts that create electrical fields (e.g., gaps between conductors). Furthermore, they also may have elements that have electromagnetic wave properties, such as a short transmission line segment.

The meta material structure may represent resistive-inductive-capacitive (RLC) networks. In the frequency range where they will be used, the characteristic of their resistive, inductive, and capacitive parameters is distributed over the geometry. Since filters, resonators, transmission lines, and antennas can be differently parametrized representatives of identical structures it is often not unambiguously possible to assign a structure to a single group. Thus, it is to be understood that a structure described as resonator can also be seen as antenna or a filter depending on its use or implementation details. Furthermore, the behavior may also change with the frequency where it is operated and a meta material structure that behaves as transmission line for one frequency may also expose a filter characteristic or create a resonance at another frequency of operation. Finally, the choice of the material impacts the behavior which means that a choice of a better conductor will emphasize a resonant behavior while a less conductive material will increase the damping and make a filter characteristic dominant.

FIG. 4 illustrates a plurality of possible meta material structures which can be used as mm-wave element 304 according to one or more examples. The meta material structure include a split ring resonator 2 having one capacitor coupling 2a, a split ring resonator 3 having two capacitor couplings 3a and 3b, a split ring resonator 4 having four capacitor couplings 4a-4d, antenna structure 5, an antenna coil 6, a nested split ring resonator 7, antenna structure 8, antenna structure 9, antenna structure 10, transmission line structure 11, antenna structure 12, coupled split ring resonators 13, split ring resonator 14, partial ring or coupling structure 15, coupled split ring resonator 16, a stacked split ring resonator 17 and a split ring resonator 18 made of two partial ring or coupling structure 15.

The mm-wave element 304 has at least one characteristic property which depends upon dimensions of the mm-wave element 304. In case of the resonator 2,3,4,7, 13,14, 16, 17 the characteristic property may a resonance frequency. In case of one of the antenna structures 5, 8, 9, 12, the characteristic property may have a negative refractive index that may allow the signal to propagate in an opposite direction of a phase velocity of the signal. The first mm-wave signal is provided to the mm-wave element 304 in a presence of the substance 112 on the windshield 104 and thus converted to the second mm-wave signal by the mm-wave element 304. In other words, the value of the first mm-wave characteristic of the second mm-wave signal without any substance 112 may depend upon the design of the mm-wave element 304.

Further, the substance 112 on the windshield 104 may influence the resistive, inductive, and capacitive parameters of the mm-wave element 304 and hence change the characteristic property of the mm-wave element 304. For example, the dielectric properties of the substance 112 on the windshield 104 may change an effective permittivity of the split ring resonator 2 which in turn can affect a change of the resonance frequency of the split ring resonator 2. The change in the resonance frequency of the mm-wave element 304 may change the amplitude of the second mm-wave element 304 signal as discussed later.

In some examples, the first frequency may be in a region below the resonance frequency of the mm-wave element 304 and the second frequency may be in a region above the resonance frequency of the mm-wave element 304.

Referring now to Figure 3, the mm-wave element 304 formed as the split ring resonator 2 of Figure 4 is characterized by the resonance frequency. The resonance frequency and the quality factor of the split ring resonator depends upon dimensions i.e., a gap in the split ring resonator 2, an inner and an outer radius of the split ring resonator 2. The influence on the second mm-wave signal is enhanced when the frequency of the first mm-wave signal is comparable to the resonance frequency of the split ring resonator 2. The dimensions of the split ring resonator 2 can be designed to match the resonance frequency of the split ring resonator with the frequency of the first mm-wave signal.

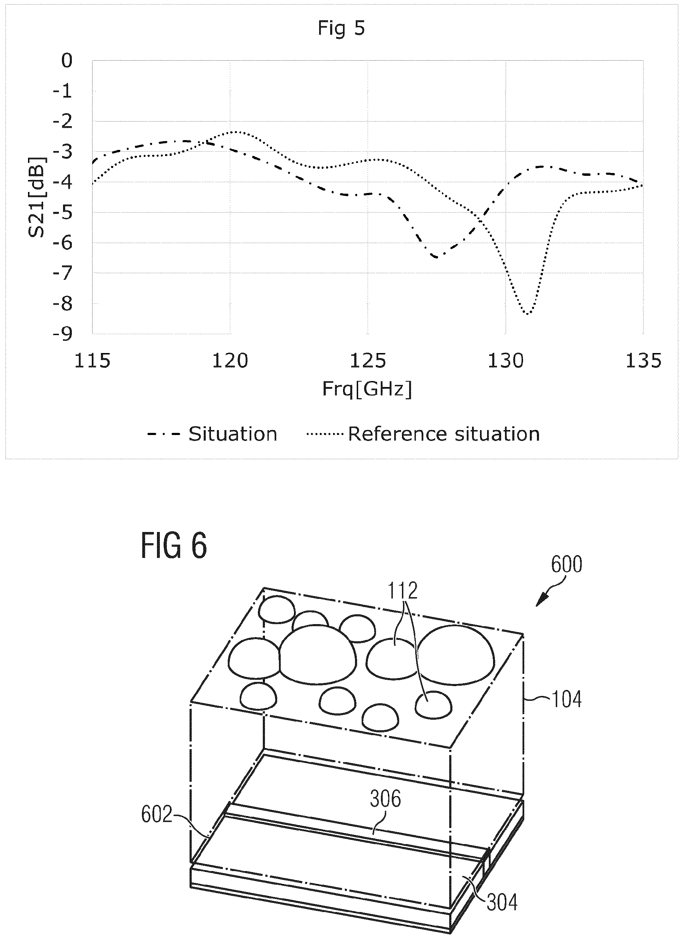

Figure 5 shows a simulation result for an arrangement shown in Figure 6. Figure 6 shows a situation 600 in which fresh water is present above the windshield 104 and is compared to a reference situation in which no substance is on the windshield. To be more specific, a forward transmission coefficient (S21) of the situation 600 and the reference situation as a function of a frequency of a mm-wave signal is shown in Figure 5. The frequency of the mm-wave signal is varied from 115 GHz to 135GHz and is shown on the x-axis. The forward transmission coefficient (S21) for the situation 600 and the reference situation is shown on a y-axis. The situation 600 is based on the arrangement 300 of Figure 3 having the mm-wave transmission element 306 but without any mm-wave element 304.

For the reference situation, the forward transmission coefficient (S21) is not zero i.e. the amplitude of the first mm-wave signal and the second mm-wave signal are not identical even though there is no substance 112 present on the windshield 104. The non-zero value of the forward transmission coefficient (S21) of the reference situation is due to influence of the windshield 104 on the first mm-wave signal. Therefore, an absolute value of the forward transmission coefficient (S21) of the situation 600 or the reference situation may not be sufficient to provide information regarding the presence of the substance 112 on the windshield 104. When comparing the forward transmission coefficient (S21) of the situation 600 and the reference situation, the influence of the windshield 104 on the first mm-wave signal in both situations will cancel out. Therefore, a comparison between the forward transmission coefficient (S21) of the situation 600 and the reference situation may provide better estimation of the presence of the substance 112 on the windshield.

The forward transmission coefficient (S21) of the situation 600 is different from the forward transmission coefficient (S21) of the reference situation for most of the frequencies of the mm-wave signal. By properly selecting the frequency such that the forward transmission coefficients (S21) for the situation 600 and the reference situation are different, the first result may be determined based on the difference between the forward transmission coefficients (S21) of the situation 600 and the reference situation at a first frequency. A non-zero difference may indicate the presence of the substance 112 on the windshield 104.

However, at the first frequency e.g. 119 GHz or around 129 GHz, the forward transmission coefficients (S21) of the situation 600 and the reference situation overlap and thereby, the first result at this frequency would not be able to indicate a presence of the substance 112. In order to avoid this, the first result may be determined at the first frequency and a second frequency to avoid any overlap of the forward transmission coefficients (S21).

Alternatively, the first result may be determined for a set of frequencies having the first frequency, the second frequency and further frequencies.

However, the mm-wave device 602 has no mm-wave element 304 which is significantly influenced by the substance 112 for example fresh water. This makes it difficult to use the arrangement 602 for determining that the substance 112 on the windshield 104 is, for example, fresh water. This can be overcome by introducing the mm-wave element 304 in the mm-wave device as discussed below. The mm-wave element 304 provides a much higher sensitivity and selectivity with respect to substances 112 present on the windshield 104.

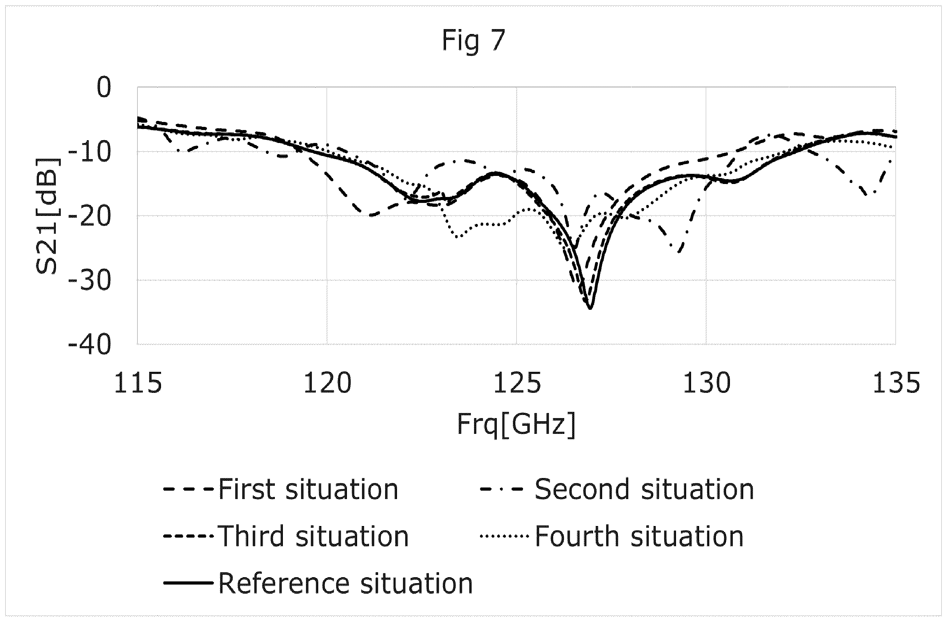

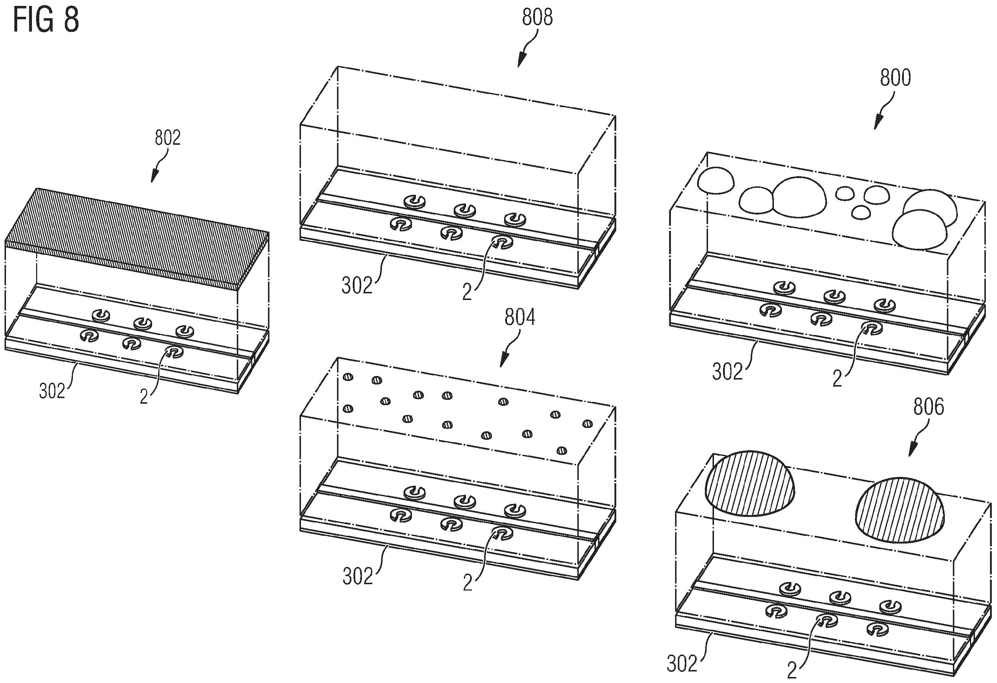

Figure 7 shows a further simulation result for different situations 800, 802, 804, 806 shown in Figure 8. The different situations 800, 802, 804, 806 of Figure 8 use the arrangement 300 of Figure 3 and are characterized by the substance 112 on the windshield 104. The first situation 800, the second situation 802, the third situation 804 and the fourth situation 806 have fresh water, salt layer, salt speckles and sea water on the windshield, 104 respectively. The split ring resonator 2 has the gap of 0.1 mm, an inner radius of 0.08 mm and an outer radius of 0.18 mm. The resonance frequency of the split ring resonator is approximately 127 GHz. Figure 7 further shows the simulation result for a reference situation 808 of Figure 8 which comprises no substance 112 on the windshield 104. The forward transmission coefficient (S21) of the reference situation 808 shows larger changes as compared to the reference situation of Figure 5 which is attributed to the presence of the split-ring resonator 2. The split-ring resonator 2 influences the conversion at all the frequencies. The minimum transmission of the forward transmitted second mm-wave signal in the reference situation 808 is around the resonance frequency of the split-ring resonance 2.

A difference in the values of the forward transmission coefficient (S21) of the situations 800, 802, 804, 806 and the reference situation 808 at one or more frequencies may be used to identify the substance 112 on the windshield 104. For example, at the frequency of 121 GHz, the situation 800 with fresh water shows almost 8 dB difference, as compared to the reference situation 808. Distinguished therefrom, the situations 802, 804, 806 comprising the salt layer, salt speckles and sea water respectively show very small difference as compared to the reference situation 808. In examples, another difference in the values of the forward transmission coefficient (S21) of the situations 800, 802, 804 and the reference situation 808 is used at another frequency. For example, at the frequency of 129 GHz, the situation 802 comprising the salt layer shows almost 10 dB difference as compared to the reference situation 808. Whereas, the system 800, 804, 806 comprising fresh water, salt speckles and sea water show up to 2 dB as compared to the reference situation 808. By determining the forward transmission coefficient (S21) at multiple frequencies, the substance 112 on the windshield 104 may be identified.

It can be observed from Figure 7, that the substance 112 on the windshield also shifts the resonance frequency of the split-ring resonator 2. The shift in the resonance frequency of the split ring resonator 2 in each situation 800, 802, 804, 806 depends upon the substance 112 on the windshield 104. For example, the fresh water, salt layer, sea water and salt speckles shifts the resonance frequency of the split-ring resonator 2 by 550 MHz, 600 MHz, 550 MHz, 120 MHz respectively. The forward transmission coefficient (S21) for each situation 800, 802, 804, 806 is sensitive to the shift in the resonance frequency of the split-ring resonator 2. The forward transmission coefficient (S21) increases as the shift in the resonance frequency of the split-ring resonator 2 increases. A minimum of the forward transmission coefficient (S21) of the fresh water, salt layer, sea water and salt speckles increases by 3 dB, 9 dB, 9.5 dB and 1.1 dB respectively as compared to a minimum of the forward transmission coefficient (S21) of the reference situation 808. This implies that the amplitude and the phase of the second mm-wave signal is also very sensitive around the resonance frequency of the split-ring resonator 2.

For example, the situations 802 and 804 comprising the salt speckles and the salt layer differ by the amount of salt on the windshield. For the situation 802, the salt layer is uniformly distributed over the windshield 104 and for the situation 804, the few salt speckles are sprinkled over the windshield 104. The salt speckles only cover a very small surface area and have a minimum volume and thus their influence is low. However it still shows a shift of the resonance frequency of 120MHz and therefore can be observed. Both situations 802, 804 can be detected by the shift in the resonance frequency and the forward transmission coefficient (S21) around the resonance frequency of the split ring resonator 2.

Therefore, by determining the shift in the resonance frequency of the split-ring resonator 2 and the forward transmission coefficient (S21), the amount of the substance 112 on the windshield can be estimated. The trend continues and reaches 600MHz and 9 dB for the closed salt layer. For sea water the effect is even more significant due to the conductivity, it reaches 550MHz and a reduced resonance by 9.5dB. For fresh water the frequency shifts by 550MHz and 3dB less resonance depth. Thus, each of the probes can be recognized by observation of the resonance peak of the system. Beside this further differences of the S21 spectrum below and above the resonance can be used and by selecting frequencies in these ranges a further differentiation criteria can be provided.

In summary, by determining the phase and/or amplitude of the second mm-wave signal at multiple frequencies where the substances have their most significant characteristic responses, the substance can be determined in a reliable manner and even for low amounts of the substance.

In the above, a new concept has been described which uses mm-waves to determine whether and which substance is present on a windshield. This allows to activate the wiper selectively based on the determined substance. For example, the wiper may be activated with different wiper sweeping frequencies depending on the determined substance. Furthermore, the wiper may not be activated if specific substances are determined. The use of mm-wave allows to incorporate sensitive mm-wave elements such as meta-material structures which are capable to detect the substance even through a windshield.

Further examples:

Example 1 discloses a method for detecting a presence of a substance on a windshield, the method comprising:

providing a first mm-wave signal such that the first mm-wave signal is converted to a second mm-wave signal dependent on a presence of the substance on windshield;
receiving the second mm-wave signal; and determining a first result indicating the presence of the substance on the windshield based on the received second mm-wave signal.

Example 2 discloses the method according to example 1, wherein the first mm-wave signal and the second mm wave signal comprise different values of a first mm-wave characteristic and wherein determining the first result comprises determining a value of the first mm-wave characteristic of the first mm-wave signal and a value of the first mm-wave characteristic of the second mm-wave signal and further determining the first result based on the value of the first mm-wave characteristic of the first mm-wave signal and the value of the first mm-wave characteristic of the second mm-wave signal.

Example 3 discloses the method according to example 1 or 2, wherein providing the first mm-wave signal comprises transmitting the first mm-wave signal from a first port and wherein receiving the second mm-wave signal comprises receiving the second mm-wave signal at a second port and wherein determining the first result comprises determining information indicating at least one of a reflection coefficient or a transmission coefficient related to the first port and the second port.

Example 4 discloses the method according to example 1 or 2, wherein providing the first mm-wave signal comprises transmitting the first mm-wave signal from a first port and wherein determining the first result comprises determining information indicating a reflection coefficient related to the first port.

Example 5 discloses the method according to any previous examples, wherein converting the first mm-wave signal to the second mm-wave signal in presence of the substance on the windshield further comprises converting the first mm-wave signal to the second mm-wave signal in presence of the substance on the windshield and a mm-wave element.

Example 6 discloses the method according to example 5, wherein providing the first mm-mm wave signal comprises providing the first mm-wave signal to the mm-wave element wherein mm-wave element is configured to change a characteristic of the mm-wave element depending on the presence of the substance on the windshield.

Example 7 discloses the method according to examples 5 to 6, wherein the value of first characteristic of the second-mm wave signal is based on the change of the characteristic of the mm-wave element.

Example 8 discloses the method according to any previous examples, wherein the first mm-wave signal comprises a first frequency and a second frequency.

Example 9 discloses the method according to example 8, wherein determining the first result based on the value of the first mm-wave characteristic of the first mm-wave signal and the value of the first mm-wave characteristic of the second mm-wave signal comprises determining the first result based on the value of the first mm-wave characteristic of the first mm-wave signal and the value of the first mm-wave characteristic of the second mm-wave signal at the first frequency and/or the second frequency.

Example 10 discloses the method according to examples 8 to 9, wherein the first mm-wave signal is provided in a first time interval having only the first frequency and the first mm-wave signal is provided in a second time interval having only the second frequency.

Example 11 discloses the method according to examples 5 to 10, wherein the mm-wave element comprises a metamaterial structure.

Example 12 discloses the method according to example 11, wherein the mm-wave element has a resonance frequency, wherein the first frequency and the second frequency are in a region around the resonance frequency of the mm-wave element.

Example 13 discloses the method according to examples 2 to 12, wherein the first mm-wave characteristic of the first mm-wave signal comprises a phase or an amplitude of the first mm-wave signal and wherein the first mm-wave characteristic of the second mm-wave signal comprises a phase or an amplitude or of the second mm-wave signal.

Example 14 discloses the method according to any previous examples, wherein the first result indicates at least one of fresh water, salt speckles water, ice, dirt, and salt layer.

Example 15 discloses a method for controlling a wiper sweeping on a windshield, the method comprising:

a method for determining a first result for detecting a presence of a substance on a windshield according to examples 1 to 14;
controlling the wiper sweeping on the windshield based on the first result indicating the presence of the substance on the windshield.

Example 16 discloses a sensor arrangement for detecting a substance on a windshield comprising:

a mm-wave signal generator configured to provide a first mm-wave signal;
a receiver configured to receive a second mm-wave signal.
a processing circuit configured to determine information indicating the substance on the windshield based on the first mm-wave signal and the second mm-wave signal.

Example 17 discloses the sensor arrangement according to example 16, further comprising a first port for transmitting the first mm-wave signal and a second port for receiving the second mm-wave signal and wherein the processing circuit is configured to determine the information indicating at least one of a reflection coefficient or a transmission coefficient related to the first port and the second port.

Example 18 discloses the sensor arrangement according to example 16, further comprising a first port for transmitting the first mm-wave signal and wherein the processing circuit is configured to determine the information indicating a reflection coefficient based on a reflected signal transmitted to the processing circuit via the first port.

Example 19 discloses the sensor arrangement according to examples 16 to 18, further comprising a mm-wave element and wherein the mm-wave element is configured to convert the first mm-wave signal into second mm-wave signal dependent on a presence of the substance on the windshield.

Example 20 discloses the sensor arrangement according to example 19, wherein the mm-wave element comprises a meta material structure.

Example 21 discloses the sensor arrangement according to examples 19 to 20, wherein the mm-wave element is configured to convert the first mm-wave signal into the second mm-wave signal such that a value of a first characteristic of the first mm-wave signal is different from a value first characteristic of the second mm-wave signal and wherein the processing circuit is configured to determine the information based on the value of the first mm-wave characteristic of the first mm-wave signal and the value of the first mm-wave characteristic of the second mm-wave signal.

Example 22 discloses the sensor arrangement according to examples 18 to 20, wherein the mm-wave element is configured to change a characteristic of the mm-wave element depending on the presence of the substance on the windshield.

Example 23 discloses the sensor arrangement according to example 21, wherein the value of first characteristic of the second-mm wave signal is based on the change of the characteristic of the mm-wave element.

Example 24 discloses the sensor arrangement according to examples 16 to 23, wherein the mm-wave generator is configured to generate the first mm-wave signal comprising multiple frequencies.

Example 25 discloses the sensor arrangement according to example 24, wherein the mm-wave generator (102) is configured to generate the first mm-wave signal comprising the multiple frequencies such that each frequency is generated at a time interval different from a time interval of any other frequency of the multiple frequencies.

Example 26 discloses the sensor arrangement according to example 25, wherein the processing circuit is configured to determine the information based on the value of the first mm-wave characteristic of the first mm-wave signal and the value of the first mm-wave characteristic of the second mm-wave signal at multiple frequencies.

Example 27 discloses the sensor arrangement according to examples 16 to 26, further comprising a wave transmission element 308and wherein the wave transmission element 308is configured to guide the first mm-wave signal and the second mm-wave signal.

Example 28 discloses the sensor arrangement according to examples 15 to 23, wherein the sensor arrangement is coupled with a controller, wherein the controlled is configured to control a speed of the wiper depending on the information indicating the substance on the windshield.

Example 29 discloses the sensor arrangement according to examples 15 to 28, wherein the processing circuit is configured to determine an information related to a characteristic of at least one S-parameter at the multiple frequencies.

## Claims

1. A method for detecting a presence of a substance on a windshield, the method comprising:

   providing a first mm-wave signal such that the first mm-wave signal is converted to a second mm-wave signal dependent on a presence of the substance on the windshield;
   receiving the second mm-wave signal; and
   determining a first result indicating the presence of the substance on the windshield based on the received second mm-wave signal.

2. The method according to claim 1, wherein the first mm-wave signal and the second mm wave signal comprise different values of a first mm-wave characteristic and wherein determining the first result comprises determining a value of the first mm-wave characteristic of the first mm-wave signal and a value of the first mm-wave characteristic of the second mm-wave signal and further determining the first result based on the value of the first mm-wave characteristic of the first mm-wave signal and the value of the first mm-wave characteristic of the second mm-wave signal.

3. The method according to claim 1 or 2, wherein providing the first mm-wave signal comprises transmitting the first mm-wave signal from a first port and wherein receiving the second mm-wave signal comprises receiving the second mm-wave signal at a second port and wherein determining the first result comprises determining information indicating at least one of a reflection coefficient or a transmission coefficient related to the first port and the second port.

4. The method according to claim 1 or 2, wherein providing the first mm-wave signal comprises transmitting the first mm-wave signal from a first port and wherein determining the first result comprises determining information indicating a reflection coefficient related to the first port.

5. The method according to any previous claims, wherein converting the first mm-wave signal to the second mm-wave signal in presence of the substance on the windshield further comprises converting the first mm-wave signal to the second mm-wave signal in presence of the substance on the windshield and a mm-wave element.

6. The method according to claim 5, wherein providing the first mm-mm wave signal comprises providing the first mm-wave signal to the mm-wave element wherein mm-wave element 304 is configured to change a characteristic of the mm-wave element 304 depending on the presence of the substance on the windshield.

7. The method according to claims 5 to 6, wherein the value of first characteristic of the second-mm wave signal is based on the change of the characteristic of the mm-wave element.

8. The method according to any previous claims, wherein the first mm-wave signal comprises a first frequency and a second frequency.

9. The method according to claim 8, wherein determining the first result based on the value of the first mm-wave characteristic of the first mm-wave signal and the value of the first mm-wave characteristic of the second mm-wave signal comprises determining the first result based on the value of the first mm-wave characteristic of the first mm-wave signal and the value of the first mm-wave characteristic of the second mm-wave signal at the first frequency and/or the second frequency.

10. The method according to claims 8 to 9, wherein the first mm-wave signal is provided in a first time interval having only the first frequency and the first mm-wave signal is provided in a second time interval having only the second frequency.

11. The method according to claims 5 to 10, wherein the mm-wave element comprises a metamaterial structure.

12. The method according to claim 11, wherein the mm-wave element has a resonance frequency, wherein the first frequency and the second frequency are in a region around the resonance frequency of the mm-wave element.

13. The method according to claims 2 to 12, wherein the first mm-wave characteristic of the first mm-wave signal comprises a phase or an amplitude of the first mm-wave signal and wherein the first mm-wave characteristic of the second mm-wave signal comprises a phase or an amplitude of the second mm-wave signal.

14. The method according to any previous claims, wherein the first result indicates at least one of fresh water, salt speckles water, ice, dirt, and salt layer.

15. A method for controlling a wiper sweeping on a windshield, the method comprising:

a method for determining a first result for detecting a presence of a substance on a windshield according to claims 1 to 14;
controlling the wiper sweeping on the windshield based on the first result indicating the presence of the substance on the windshield.

16. A sensor arrangement (110, 210, 302, 602) for detecting a substance (112) on a windshield (104) comprising:

a mm-wave signal generator (102) configured to provide a first mm-wave signal;
a receiver (106) configured to receive a second mm-wave signal.
a processing circuit (108) configured to determine information indicating the substance (112) on the windshield (104) based on the first mm-wave signal and the second mm-wave signal.

17. The sensor arrangement (210, 302, 602) according to claim 16, further comprising a first port (202) for transmitting the first mm-wave signal and a second port (204) for receiving the second mm-wave signal and wherein the processing circuit (108) is configured to determine the information indicating at least one of a reflection coefficient or a transmission coefficient related to the first port (202) and the second port (204).

18. The sensor arrangement (210, 302, 602) according to claim 16, further comprising a first port (202) for transmitting the first mm-wave signal and wherein the processing circuit (108) is configured to determine the information indicating a reflection coefficient based on a reflected signal transmitted to the processing circuit (108) via the first port (202).

19. The sensor arrangement (210, 302) according to claims 16 to 18, further comprising a mm-wave element (304) and wherein the mm-wave element (304) is configured to convert the first mm-wave signal into second mm-wave signal dependent on a presence of the substance (112) on the windshield (104).

20. The sensor arrangement (210, 302) according to claim 19, wherein the mm-wave element (304) comprises a meta material structure.

21. The sensor (210, 302) arrangement according to claims 19 to 20, wherein the mm-wave element (304) is configured to convert the first mm-wave signal into the second mm-wave signal such that a value of a first mm-wave characteristic of the first mm-wave signal is different from a value first mm-wave characteristic of the second mm-wave signal and wherein the processing circuit (108) is configured to determine the information based on the value of the first mm-wave characteristic of the first mm-wave signal and the value of the first mm-wave characteristic of the second mm-wave signal.

22. The sensor arrangement (210, 302) according to claims 19 to 21, wherein the mm-wave element (304) is configured to change a characteristic of the mm-wave element (304) depending on the presence of the substance (112) on the windshield (104).

23. The sensor arrangement (210, 302) according to claim 22, wherein the value of first mm-wave characteristic of the second-mm wave signal is based on the change of the characteristic of the mm-wave element (304).

24. The sensor arrangement (110, 210, 302, 602) according to claims 16 to 23, wherein the mm-wave generator (102) is configured to generate the first mm-wave signal comprising multiple frequencies.

25. The sensor arrangement (110, 210, 302, 602) according to claim 24, wherein the mm-wave generator (102) is configured to generate the first mm-wave signal comprising the multiple frequencies such that each frequency is generated at a time interval different from a time interval of any other frequency of the multiple frequencies.

26. The sensor arrangement (110, 210, 302, 602) according to claim 25, wherein the processing circuit (108) is configured to determine the information based on the value of the first mm-wave characteristic of the first mm-wave signal and the value of the first mm-wave characteristic of the second mm-wave signal at multiple frequencies.

27. The sensor arrangement (110, 210, 302, 602) according to claims 16 to 26, further comprising a wave transmission element (308) and wherein the wave transmission element (308) is configured to guide the first mm-wave signal and the second mm-wave signal.

28. The sensor arrangement (110, 210, 302, 602) according to claims 15 to 27, wherein the sensor arrangement is coupled with a controller, wherein the controlled is configured to control a speed of the wiper depending on the information indicating the substance (112) on the windshield (104).

29. The sensor arrangement according to claims 15 to 28, wherein the processing circuit (108) is configured to determine an information related to a characteristic of at least one S-parameter at the multiple frequencies.

FIG 1

FIG 2

# FIG 3

# FIG 4

## Fig 5

- · - Situation  ········ Reference situation

## FIG 6

Fig 7

- - - First situation   - · - Second situation
- - - - Third situation   · · · · · · Fourth situation
——— Reference situation

EP 4 714 757 A1

FIG 8

Europäisches
Patentamt

European
Patent Office

Office européen
des brevets

# EUROPEAN SEARCH REPORT

**Application Number**

EP 24 20 1906

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2012 0043533 A (AUTO IND CO LTD [KR]) 4 May 2012 (2012-05-04) | 1,2, 5-10, 13-16, 19, 21-25, 27,28 | INV. B60S1/08 G01N22/00 G01N33/18 G01S13/88 |
| Y | * abstract * <br> * figures 1-8 * <br> * paragraph [0006] - paragraph [0009] * <br> * paragraph [0011] - paragraph [0038] * <br> ----- | 3,4,11, 12,17, 18,20, 26,29 | ADD. G01N21/3581 G01N21/94 G01N21/958 G02B1/00 |
| X | US 3 786 330 A (INOUE G ET AL) 15 January 1974 (1974-01-15) | 1,2, 13-16, 27,28 | |
| A | * abstract * <br> * figures 1-4 * <br> * column 1, line 28 - line 35 * <br> * column 1, line 53 - column 5, line 22 * <br> ----- | 3,4,17, 18 | |
| Y | HOQUE AHASANUL ET AL: "DNG Metamaterial Reflector Using SOCT Shaped Resonator for Microwave Applications", IEEE ACCESS, IEEE, USA, vol. 9, 6 April 2021 (2021-04-06), pages 59148-59159, XP011851499, DOI: 10.1109/ACCESS.2021.3071472 [retrieved on 2021-04-21] | 3,4,11, 12,17, 18,20, 26,29 | TECHNICAL FIELDS SEARCHED (IPC) B60S G01N G01S G02B |
| A | * the whole document * <br><br><br><br><br> ----- <br> -/-- | 1,2, 5-10,13, 14,16, 19, 21-25,27 | |

The present search report has been drawn up for all claims

| Place of search | Date of completion of the search | Examiner |
|---|---|---|
| The Hague | 27 March 2025 | De Kroon, Arnoud |

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/143145 A1 (KLEIN NORBERT [GB] ET AL) 24 May 2018 (2018-05-24)<br><br>* abstract *<br>* figures 1-10 *<br>* paragraph [0011] - paragraph [0030] *<br>* paragraph [0042] - paragraph [0075] *<br>----- | 1-10,12, 13, 16-19, 21-27,29 | |
| A | US 2020/116857 A1 (FLORES TAPIA DANIEL [US] ET AL) 16 April 2020 (2020-04-16)<br>* the whole document *<br>----- | 1-29 | |

TECHNICAL FIELDS
SEARCHED       (IPC)

The present search report has been drawn up for all claims

| Place of search | Date of completion of the search | Examiner |
|---|---|---|
| The Hague | 27 March 2025 | De Kroon, Arnoud |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 1906

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2025

| Patent document cited in search report | Publication date | Patent family member(s) | Publication date |
|---|---|---|---|
| KR 20120043533 A | 04-05-2012 | NONE | |
| US 3786330 A | 15-01-1974 | NONE | |
| US 2018143145 A1 | 24-05-2018 | NONE | |
| US 2020116857 A1 | 16-04-2020 | CN 111045012 A | 21-04-2020 |
| | | DE 102019115831 A1 | 16-04-2020 |
| | | US 2020116857 A1 | 16-04-2020 |

EPO FORM P0459

For more details about this annex : see Official Journal of the European Patent Office, No. 12/82